# EUROPEAN PATENT SPECIFICATION

(11) **EP 4 465 845 B1**
(45) Date of publication and mention of the grant of the patent: **04.11.2026**
(21) Application number: 23702654.7
(22) Date of filing: 19.01.2023
(51) Int. Cl.: A24F 40/49, A24F 40/53

(54) **AEROSOL PROVISION ARRANGEMENT**
AEROSOLBEREITSTELLUNGSANORDNUNG
AGENCEMENT DE FOURNITURE D'AÉROSOL

(30) Priority: 21.01.2022 GB 202200783
(43) Date of publication of application: 27.11.2024
(60) Divisional application: 26183436.0 / 4 781 848
(73) Proprietor: Nicoventures Trading Limited, London WC2R 3LA (GB)
(72) Inventor: BAKER, Darryl, London WC2R 3LA (GB); ROSSER, Nicholas, London WC2R 3LA (GB); BRUTON, Connor, London WC2R 3LA (GB); CROSIER, Mark, Ipswich IP3 0BN (GB); KERSEY, Robert, Preston Brighton BN1 6AF (GB)
(74) Representative: Dehns
(86) International application number: PCT/GB2023/050101
(87) International publication number: WO 2023/139371

(56) References cited:
- WO-A1-2021/085880
- CA-A1- 3 135 789
- US-A1- 2020 054 071
- US-A1- 2020 057 882
- US-A1- 2020 337 382

## Description

### Technical Field

The present invention relates to an aerosol provision arrangement, an aerosol provision device, a method of providing an aerosol in an aerosol provision arrangement, and an aerosol provision means.

### Background

Aerosol provision systems are known. Common systems use heaters which are activated by a user to create an aerosol by an aerosol provision device from an aerosol generating material which is then inhaled by the user. The device may be activated by a user at the push of a button or merely by the act of inhalation. Modern systems can use consumable elements containing the aerosol generating material. It can be desirable for the manufacturer to enable control over the activation of the systems. This may avoid the activation of the system in undesirable circumstances.

Related art includes US 2020/0337382 A1 which discloses artificial intelligence in an aerosol delivery device, WO 2021/085880 A1 which discloses an apparatus and method of performing user authentication, US 2020/054071 A1 which discloses an unlocking method f an electronic cigarette, and CA 3135789 A1 which discloses authentication and age verification for an aerosol delivery device.

The present invention is directed toward solving some of the above problems.

### Summary

Aspects of the invention are defined in the accompanying claims.

Arrangements in accordance with the present invention can ensure that unauthorised users are prevented from using the arrangement while authorised users are enabled to use the arrangement. The security and control over the usage of the device is therefore improved.

### Description of Drawings

The present teachings will now be described by way of example only with reference to the following figures:
Figure 1 is a schematic view of an aerosol provision arrangement according to an example;
Figure 2 is a schematic view of an aerosol provision arrangement according to an example; and,
Figure 3 is a flow diagram according to an example.

While the invention is susceptible to various modifications and alternative forms, specific embodiments are shown by way of example in the drawings and are herein described in detail. It should be understood, however, that the drawings and detailed description of the specific embodiments are not intended to limit the invention to the particular forms disclosed. On the contrary, the invention covers all modifications, equivalents and alternatives falling within the scope of the present invention as defined by the appended claims.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

The present disclosure relates to aerosol provision systems, which may also be referred to as aerosol provision systems, such as e-cigarettes. Throughout the following description the term "e-cigarette" or "electronic cigarette" may sometimes be used, but it will be appreciated this term may be used interchangeably with aerosol provision system / device and electronic aerosol provision system / device. Furthermore, and as is common in the technical field, the terms "aerosol" and "vapour", and related terms such as "vaporise", "volatilise" and "aerosolise", may generally be used interchangeably.

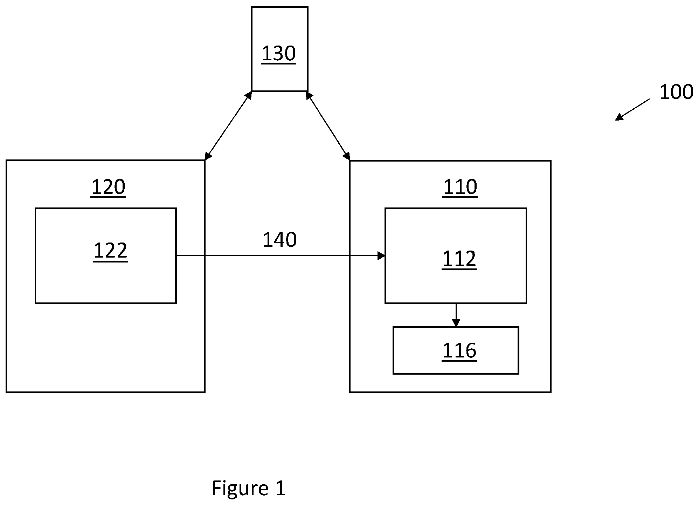

Figure 1 illustrates a schematic view of an example of an aerosol provision arrangement 100 according to the present invention and a user 130. The aerosol provision arrangement 100 has an aerosol provision device 110. The aerosol provision device 110 has control circuitry 112. The control circuitry 112 is arranged to control an activation state of the aerosol provision device 110. The aerosol provision arrangement 100 has a biometric detector 120 arranged to detect a property associated with a user 130 (not part of the arrangement 100) of the aerosol provision device 110. The biometric detector 120 detects a property of the user 130 and provides a signal 140 to the control circuitry 112. The control circuitry 112 is arranged to change an activation state of the aerosol provision device 110 upon receiving a signal from the biometric detector 120 associated with an authorised user. The biometric detector 120 uses nodal point identification.

The aerosol provision device 110 in the example shown in Figure 1 has control circuitry 112 which can control operational aspects of the aerosol provision device 110. In particular, the control circuitry 112 may send a signal to a heater, heating element, atomiser, vibrating plate, other aerosol generating element or the like 116 in the aerosol provision device 110 to allow activation or to cause activation of the heater 116. The signal from the control circuitry 112 is triggered by the signal 140 sent from the biometric detector 120 upon authentication of a user 130 desiring to use the aerosol provision device 110.

As such, in one use scenario, a user 130 uses the biometric detector 120 to send an authentication signal to the aerosol provision device 110 to enable activation of the aerosol provision device 110. The aerosol provision device 110 may be in a default activation state prior to any use by a user 130. This default activation state may be a non-operating state. In this example, a user may not operate the aerosol provision device 110 until authentication has occurred via the biometric detector 120.

The biometric detector 120 may have control circuitry 122 for receiving data from the user 130, processing the data against a memory or the like, providing a signal to the control circuitry 112 of the aerosol provision device 100.

In the example where the processing of the data is performed on the biometric detector 120, the signal from the biometric detector 120 may be a signal informing the aerosol provision device 110 to either enable activation (if the user is an authorised user) or prevent activation (if the user is not an authorised user). The processing may take the form of comparing the data from the user (the identified nodal points) against a database of identified nodal points of registered and authenticated users. If there is a match, the signal 140 indicates the user is authorised and the device 110 is to function. If there is not a match, the biometric detector 120 may request the user to try again and/or send a signal to the aerosol provision device 110 that the user is not authorised.

In the example where the processing of the data is performed on the aerosol provision device 110, the signal from the biometric detector 120 may be a signal relating to the data from the user 130 and the processing of the signal against a memory or the like, may be performed by the control circuitry 112 of the aerosol provision device 110. In this instance, once the processing is performed and the user 130 identified as either an authorised or an unauthorised user, the control circuitry 112 may send a signal to the heater 116 to either enable use of the aerosol provision device 110, if the user is authorised, or not, if the user is unauthorised.

The default activation state of the aerosol provision device 110 may be a non-operating state. In this instance, if the user 130 is not an authorised user, upon receipt of a signal from the biometric detector 120, the control circuitry 112 may not send a signal to the heater 116 as there is no change in state of the aerosol provision device 110.

The activation states of the aerosol provision device 110 may, broadly, be considered as operating or non-operating states. Signals provided by the biometric detector 120 may be received by the control circuitry 112 and ultimately result in changing the aerosol provision device 110 from one state to another.

In an operating state, elements of the aerosol provision device 110 used to generate an aerosol (such as an atomiser, heater or the like) may be activated. The specific activation of the device 110 may require an additional input which may be inhalation on the device, pressing a button on the device or the like, alternatively the device 110 may automatically generate aerosol by the heater 116 upon receiving a signal from the control circuitry 112.

In a non-operating state, elements of the aerosol provision device 110 used to generate an aerosol (such as an atomiser, heater or the like) may not be activated. In this example, inhaling on the device or pressing a button makes no impact on the heater or atomiser 116 etc.

The term "operating state" may refer to a number of states in which the device 110 can be operated. Similarly the term "non-operating state" may refer to a number of states in which the device 110 cannot be operated.

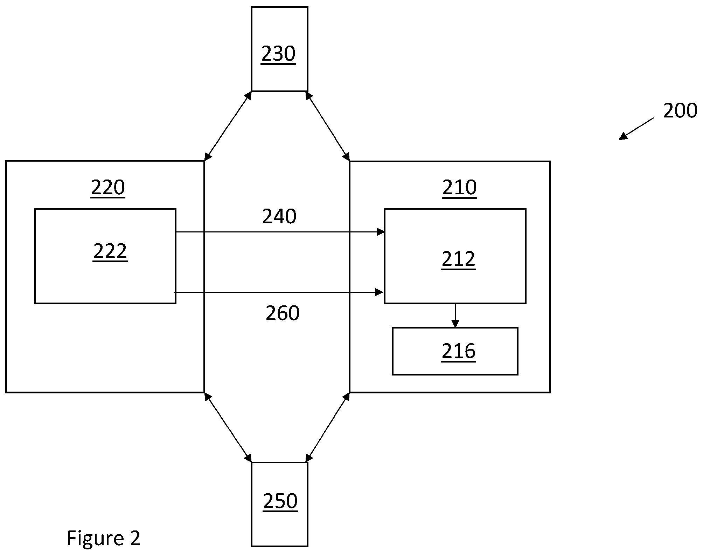

Referring now to Figure 2, there is a shown a similar arrangement 200 to the arrangement 100 of Figure 1. Similar features, to those features used in Figure 1, are shown with the reference numerals increased by 100. For example, the arrangement 100 of Figure 1 is similar to the arrangement 200 of Figure 2. Similar or identical features may not be discussed for conciseness. Also shown in Figure 2, alongside the arrangement 200 are two users 230, 250.

Figure 2 shows an example wherein a first user 230 attempts to access the aerosol provision device 210 and, separately, a second user 250 attempts to access the aerosol provision device 210. The biometric detector 220 detects a property of the user 230 using nodal point identification and provides a signal 240 to the control circuitry 212 of the aerosol provision device 210. If the user 230 is authorised, the control circuitry 212 allows the aerosol provision device 210 to function and can activate the heater 216 for use by the user 230. The operating state of the aerosol provision device 210 is therefore in an active state for the first user 230.

The second user 250 may attempt to use the aerosol provision device 210. The biometric detector 220 detects a property of the second user 250 using nodal point identification and provides a signal 240 to the control circuitry 212 of the aerosol provision device 210. If the user 250 is not authorised, the control circuitry may prevent the aerosol provision device 210 from being activated. This may involve leaving the aerosol provision device 210 in a non-operating state (if the device 210 was already in a non-operating state) or changing the state of the aerosol provision device 210 from operating to non-operating.

In the event that the first user 230 is an authorised user and the second user 250 is unauthorised, the operating state changes of the aerosol provision device 210 may be as described below.

Initially the device 210 is in a default activation state, which is a non-operating state. The first user 230 may use the biometric detector 220 to change the state of the device 210 to an operating state and subsequently use the device 210. After the first user 230 has finished using, or deemed to have finished using, the device 210, such as after a smoking session, number of puffs, or after a predetermined period of time or the like, the device 210 may reset to a non-operating state. In this way, the user 230 may need to change the state of the device 210 to an operating state before a further use session. Such an arrangement increases the safety of the device 210 by preventing an unauthorised user using the device 210 after an authorised user has changed the state of the device 210 to an operating state and finished their smoking session.

When the unauthorised second user 250 attempts to access the device 210, the biometric detector 220 provides a signal 260 to the control circuitry 212. The control circuitry 212 maintains the device 210 in a non-operating state, such that the second user 250 is prevented from operating the device 210. According to the invention the control circuitry 212, upon identifying the user 250 as an unauthorised user attempting to use the device 210, changes the state of the device 210 to a locked state. A locked state is a form of non operating state wherein, before the device 210 can be used to provide an aerosol, an authorised user 230 must be detected by the biometric detector 220 to override the locked state. According to the invention a locked state requires a further level of identification of an authorised user 230 to enable the locked state to be changed to an unlocked operating state. This may be in the form of a password, passkey, alphanumerical sequence or the like. The use of such a locked state provides an indication to the authorised user 230 than an attempt has been made to use the device 210 by an unauthorised user 250.

The term "activation state" as used herein includes operating and non-operating states. An operating state may be a state in which the device can be used. Other, more specific, operating states may dictate the performance of the device, such as selecting the heating mechanisms used, the heating profile used, the aerosol generating material used, etc. Such operating states may be associated with specific users. In this way, upon recognition of authorised user 1, corresponding heating mechanism 1 is used to provide heating profile 1 on aerosol generating medium 1. Upon recognition of authorised user 2, corresponding heating mechanism 2 is used to provide heating profile 2 on aerosol generating medium 2. In this way, different users can have their personalised aerosol provided upon recognition of that user.

Non-operating states may be a state in which the device cannot be used. Other, more specific, non-operating states include the default non-operating state, which can be changed by biometric recognition of an authorised user by the arrangement. Other non-operating states, such as a locked state, may require more than the satisfying of one criteria by a user (e.g. one biometric detection) to change the device to an operating state. This may assist in preventing the hacking of a device and can inform an authorised user of attempted accesses by unauthorised users. This arrangement therefore improves the overall protection provided by the arrangement.

Nodal point identification enables recognition of a user by virtue of the location of identifiable nodes on an image. This may be used to provide a facial recognition system. Such nodal points may be the locations of the eyes, with the distance between the eyes being used to provide an identifying feature of a user. Nodal points may be locations around a chin to identify the jaw shape of a user. Nodal points may be the edges of the forehead and the distance between these, and the outer locations of the face, used to identify face shape of a user. Nodal point identification can be used to recognise the face of a user. This can therefore provide a biometric detection mechanism with which to allow access to an aerosol provision device.

The biometric detector in the examples described herein may be a face scanner. The biometric detector may alternatively be a projector scanner.

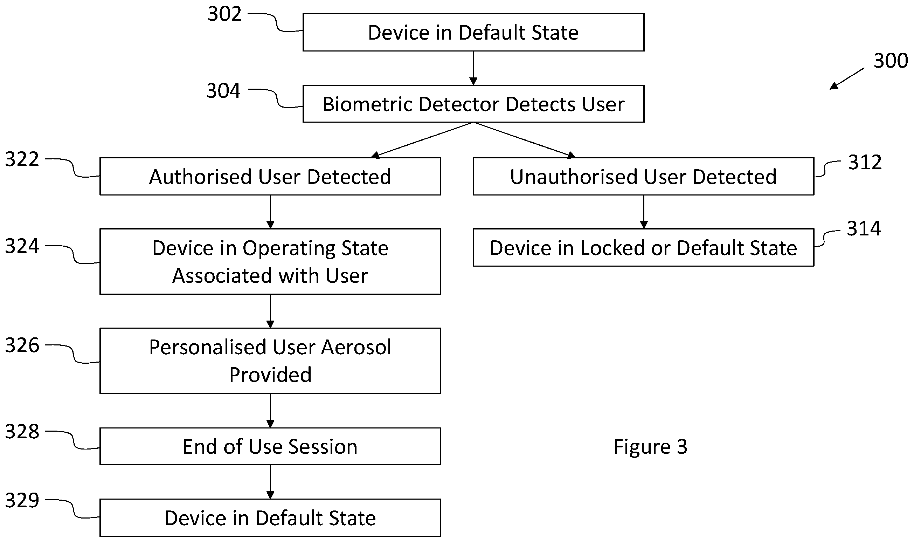

Figure 3 shows a method 300 of use of an aerosol provision arrangement. In the method 300, the device starts in a default state 302. When a user attempts to use the device, the user may be asked to use the biometric detector for identification. The biometric detector detects the user 304 and detects a property of the user. The biometric detector sends a signal to the control circuitry according to the detected property of the user. As discussed above, one of the biometric detector or control circuitry compares the signal against a memory, database or the like to confirm the authorisation level (authorised or unauthorised) of the user. If an unauthorised user is detected 312, the method goes on to step 314 wherein the device is put into a locked state or stays in the default state.

If an authorised user is detected 322, the device is changed to being in an operating state 324. As described above, this operating state may be associated with the user to provide a personalised aerosol. As such, the heater or atomiser is operated for a predetermined heating profile on predetermined aerosol generating medium to provide a personalised user aerosol to a user 326. After the user has ended their session, which may be indicated to the device by the user by pressing a button or after a given period of time or after a predetermined number of puffs, the use session is ended or deemed to have ended 328. After this, the device is returned to the default state 329 as in step 302. As such, use of the device disclosed herein can be protected against unauthorised use and unauthorised users.

The biometric detector may be part of an external device such as a smartphone or tablet or the like. The biometric detector and the aerosol provision device may interact via an application on the smartphone or tablet or the like. The aerosol provision device may be accessed the biometric detecting capability of one or more smartphones or tablets. The use of only one smartphone increases the prevention of unauthorised users accessing the aerosol provision device, as such unauthorised users would need both the aerosol provision device and the device on which the biometric detector was stored.

Alternatively, the biometric detector may be part of the aerosol provision device. This provides a more compact solution for a user.

In a particular example, the device disclosed herein may operate with a flavour pod which is replaceable in the device. The flavour may be any of tobacco and glycol and may include extracts (e.g., licorice, hydrangea, Japanese white bark magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamon, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof.

When combined with an aerosol generating medium, the aerosol provision device as disclosed herein may be referred to as an aerosol provision system.

Thus there has been described an aerosol provision arrangement comprising: an aerosol provision device comprising control circuitry for controlling an activation state of the aerosol provision device; and, a biometric detector arranged to detect a property associated with a user of the aerosol provision device and provide a signal to the control circuitry, wherein the control circuitry is arranged to change an activation state of the aerosol provision device upon receiving a signal from the biometric detector associated with an authorised user, and wherein the biometric detector uses nodal point identification.

The aerosol provision system may be used in a tobacco industry product, for example a non-combustible aerosol provision system.

In one embodiment, the tobacco industry product comprises one or more components of a non-combustible aerosol provision system, such as a heater and an aerosolizable substrate.

In one embodiment, the aerosol provision system is an electronic cigarette also known as a vaping device.

In one embodiment the electronic cigarette comprises a heater, a power supply capable of supplying power to the heater, an aerosolizable substrate such as a liquid or gel, a housing and optionally a mouthpiece.

In one embodiment the aerosolizable substrate is contained in or on a substrate container. In one embodiment the substrate container is combined with or comprises the heater.

In one embodiment, the tobacco industry product is a heating product which releases one or more compounds by heating, but not burning, a substrate material. The substrate material is an aerosolizable material which may be for example tobacco or other non-tobacco products, which may or may not contain nicotine. In one embodiment, the heating device product is a tobacco heating product.

**In** one embodiment, the heating product is an electronic device.

**In** one embodiment, the tobacco heating product comprises a heater, a power supply capable of supplying power to the heater, an aerosolizable substrate such as a solid or gel material.

**In** one embodiment the heating product is a non-electronic article.

**In** one embodiment the heating product comprises an aerosolizable substrate such as a solid or gel material, and a heat source which is capable of supplying heat energy to the aerosolizable substrate without any electronic means, such as by burning a combustion material, such as charcoal.

**In** one embodiment the heating product also comprises a filter capable of filtering the aerosol generated by heating the aerosolizable substrate.

**In** some embodiments the aerosolizable substrate material may comprise an aerosol or aerosol generating agent or a humectant, such as glycerol, propylene glycol, triacetin or diethylene glycol.

**In** one embodiment, the tobacco industry product is a hybrid system to generate aerosol by heating, but not burning, a combination of substrate materials. The substrate materials may comprise for example solid, liquid or gel which may or may not contain nicotine. **In** one embodiment, the hybrid system comprises a liquid or gel substrate and a solid substrate. The solid substrate may be for example tobacco or other non-tobacco products, which may or may not contain nicotine. **In** one embodiment, the hybrid system comprises a liquid or gel substrate and tobacco.

## Claims

1. An aerosol provision arrangement comprising:
an aerosol provision device (110) comprising control circuitry (112) for controlling an activation state of the aerosol provision device; and,
a biometric detector (120) arranged to detect a property associated with a user (130) of the aerosol provision device and provide a signal to the control circuitry,
wherein the control circuitry (112) is arranged to change an activation state of the aerosol provision device (110) upon receiving a signal from the biometric detector (120) associated with an authorised user, and
wherein the biometric detector (120) uses nodal point identification;
and **characterised in that**:
upon receiving a signal from the biometric detector (120) associated with an unauthorised user, the control circuitry is configured to set the activation state of the aerosol provision device to a non-operating which is a locked state, which requires a further level of identification to enable the locked state to be changed to an unlocked operating state.

2. An aerosol provision arrangement according to claim 1, wherein the further level of identification comprises a password or passkey.

3. An aerosol provision arrangement according to claim 1 or 2, wherein a default activation state of the aerosol provision device (110) is a non-operating state;
and wherein the control circuit is configured to, after a user has finished using the device, reset the device to the default non-operating state.

4. An aerosol provision arrangement according to claim 3, wherein a user is deemed to have finished using the aerosol provision device (110) after ending a smoking session.

5. An aerosol provision arrangement according to any preceding claim, wherein the biometric detector (120) comprises a face scanner.

6. An aerosol provision arrangement according any preceding claim, wherein, when an authorised user is detected, the control circuitry (112) changes the activation state of the aerosol provision device (110) to an operating state, wherein in the operating state, a heater (116) is automatically activated.

7. An aerosol provision arrangement according to any preceding claim, wherein the control circuitry (112) is arranged to change an activation state of the aerosol provision device (110) from a default activation state to a first activation state upon receiving a first signal from the biometric detector (120), and wherein the control circuitry (112) is arranged to change an activation state of the aerosol provision device from a default activation state to a second activation state upon receiving a second signal from the biometric detector (120), wherein the first signal is associated with a first user and the second signal is associated with a second user.

8. An aerosol provision arrangement according to claim 7, wherein the first user is a first authorised user and the first activation state is a first operating state.

9. An aerosol provision arrangement according to claim 8, wherein the second user is a second authorised user and the second activation state is a second operating state, wherein the second operating state is different to the first operating state

10. An aerosol provision arrangement according to claim 9, wherein the first operating state is associated with a first heating profile, and wherein the second operating state is associated with a second heating profile.

11. The aerosol provision arrangement of any preceding claim, wherein the aerosol provision device (110) comprises the biometric detector (120)

12. An aerosol provision arrangement according to any of claims 1 to 10, wherein the biometric detector (120) is part of an external device, optionally comprising a smartphone or tablet.

13. A method of providing an aerosol from an aerosol provision arrangement, the method comprising:
sending, by a biometric detector (120), a signal associated with an authorised user, wherein the biometric detector is arranged to detect a property associated with a user of the aerosol provision device for providing the signal, wherein the biometric detector uses nodal point identification;
receiving, by control circuitry (112) of an aerosol provision device (110), the signal;
changing, by the control circuitry (112), an activation state of the aerosol provision device (110) from a default activation state to an operating state; and
**characterised in that**:
upon receiving a signal from the biometric detector associated with an unauthorised user, the control circuitry (112) setting the activation state of the aerosol provision device (110) to a non-operating which is a locked state, which requires a further level of identification to enable the locked state to be changed to an unlocked operating state.

14. The method of claim 13, wherein the default activation state is a non-operating state.

15. The method of claim 14, wherein the control circuit is configured to, after a user has finished using the aerosol provision device (112), reset the aerosol provision device to the non-operating state.

## Patentansprüche

1. Aerosolbereitstellungsanordnung, umfassend:
eine Aerosolbereitstellungsvorrichtung (110), die eine Steuerschaltung (112) zum Steuern eines Aktivierungszustands der Aerosolbereitstellungsvorrichtung umfasst; und,
einen biometrischen Detektor (120), der dazu eingerichtet ist, eine mit einem Benutzer (130) verbundene Eigenschaft der Aerosolbereitstellungsvorrichtung zu erfassen und der Steuerschaltung ein Signal bereitzustellen,
wobei die Steuerschaltung (112) dazu eingerichtet ist, beim Empfangen eines Signals von dem biometrischen Detektor (120), das mit einem autorisierten Benutzer verbunden ist, einen Aktivierungszustand der Aerosolbereitstellungsvorrichtung (110) zu ändern, und
wobei der biometrische Detektor (120) eine Knotenpunktidentifizierung verwendet;
und **dadurch gekennzeichnet, dass**:
beim Empfangen eines Signals von dem biometrischen Detektor (120), das mit einem nicht autorisierten Benutzer verbunden ist, die Steuerschaltung dazu ausgebildet ist, den Aktivierungszustand der Aerosolbereitstellungsvorrichtung auf einen Nichtbetriebszustand zu setzen, der ein verriegelter Zustand ist, der ein weiteres Niveau der Identifizierung erfordert, um zu ermöglichen, dass der verriegelte Zustand in einen entriegelten Betriebszustand geändert wird.

2. Aerosolbereitstellungsanordnung nach Anspruch 1, wobei das weitere Niveau der Identifizierung ein Passwort oder einen Passschlüssel umfasst.

3. Aerosolbereitstellungsanordnung nach Anspruch 1 oder 2, wobei ein standardmäßiger Aktivierungszustand der Aerosolbereitstellungsvorrichtung (110) ein Nichtbetriebszustand ist;
und wobei die Steuerschaltung dazu ausgebildet ist, nachdem ein Benutzer die Verwendung der Vorrichtung beendet hat, die Vorrichtung in den standardmäßigen Nichtbetriebszustand zurückzusetzen.

4. Aerosolbereitstellungsanordnung nach Anspruch 3, wobei davon ausgegangen wird, dass ein Benutzer die Verwendung der Aerosolbereitstellungsvorrichtung (110) nach Beendigung einer Rauchsitzung beendet hat.

5. Aerosolbereitstellungsanordnung nach einem vorstehenden Anspruch, wobei der biometrische Detektor (120) einen Gesichtsscanner umfasst.

6. Aerosolbereitstellungsanordnung nach einem vorstehenden Anspruch, wobei die Steuerschaltung (112), wenn ein autorisierter Benutzer erfasst wird, den Aktivierungszustand der Aerosolbereitstellungsvorrichtung (110) in einen Betriebszustand ändert, wobei im Betriebszustand eine Heizvorrichtung (116) automatisch aktiviert wird.

7. Aerosolbereitstellungsanordnung nach einem vorstehenden Anspruch, wobei die Steuerschaltung (112) dazu eingerichtet ist, beim Empfangen eines ersten Signals von dem biometrischen Detektor (120) einen Aktivierungszustand der Aerosolbereitstellungsvorrichtung (110) von einem standardmäßigen Aktivierungszustand in einen ersten Aktivierungszustand zu ändern, und wobei die Steuerschaltung (112) dazu eingerichtet ist, beim Empfangen eines zweiten Signals von dem biometrischen Detektor (120) einen Aktivierungszustand der Aerosolbereitstellungsvorrichtung von einem standardmäßigen Aktivierungszustand in einen zweiten Aktivierungszustand zu ändern, wobei das erste Signal mit einem ersten Benutzer verbunden ist und das zweite Signal mit einem zweiten Benutzer verbunden ist.

8. Aerosolbereitstellungsanordnung nach Anspruch 7, wobei der erste Benutzer ein erster autorisierter Benutzer ist und der erste Aktivierungszustand ein erster Betriebszustand ist.

9. Aerosolbereitstellungsanordnung nach Anspruch 8, wobei der zweite Benutzer ein zweiter autorisierter Benutzer ist und der zweite Aktivierungszustand ein zweiter Betriebszustand ist, wobei sich der zweite Betriebszustand vom ersten Betriebszustand unterscheidet

10. Aerosolbereitstellungsanordnung nach Anspruch 9, wobei der erste Betriebszustand mit einem ersten Heizprofil verbunden ist und wobei der zweite Betriebszustand mit einem zweiten Heizprofil verbunden ist.

11. Aerosolbereitstellungsanordnung nach einem vorstehenden Anspruch, wobei die Aerosolbereitstellungsvorrichtung (110) den biometrischen Detektor (120) umfasst

12. Aerosolbereitstellungsanordnung nach einem der Ansprüche 1 bis 10, wobei der biometrische Detektor (120) Teil einer externen Vorrichtung ist, die optional ein Smartphone oder ein Tablet umfasst.

13. Verfahren zum Bereitstellen eines Aerosols aus einer Aerosolbereitstellungsanordnung, das Verfahren umfassend:
Senden eines mit einem autorisierten Benutzer verbundenen Signals durch einen biometrischen Detektor (120), wobei der biometrische Detektor dazu eingerichtet ist, eine mit einem Benutzer verbundene Eigenschaft der Aerosolbereitstellungsvorrichtung zum Bereitstellen des Signals zu erfassen, wobei der biometrische Detektor eine Knotenpunktidentifizierung verwendet;
Empfangen des Signals durch eine Steuerschaltung (112) einer Aerosolbereitstellungsvorrichtung (110);
Ändern eines Aktivierungszustands der Aerosolbereitstellungsvorrichtung (110) durch die Steuerschaltung (112) von einem standardmäßigen Aktivierungszustand in einen Betriebszustand; und
**dadurch gekennzeichnet, dass**:
beim Empfangen eines Signals von dem biometrischen Detektor, das mit einem nicht autorisierten Benutzer verbunden ist, die Steuerschaltung (112) den Aktivierungszustand der Aerosolbereitstellungsvorrichtung (110) auf einen Nichtbetriebszustand setzt, der ein verriegelter Zustand ist, der ein weiteres Niveau der Identifizierung erfordert, um zu ermöglichen, dass der verriegelte Zustand in einen entriegelten Betriebszustand geändert wird.

14. Verfahren nach Anspruch 13, wobei der standardmäßige Aktivierungszustand ein Nichtbetriebszustand ist.

15. Verfahren nach Anspruch 14, wobei die Steuerschaltung dazu ausgebildet ist, nachdem ein Benutzer die Verwendung der Aerosolbereitstellungsvorrichtung (112) beendet hat, die Aerosolbereitstellungsvorrichtung in den Nichtbetriebszustand zurückzusetzen.

## Revendications

1. Agencement de fourniture d'aérosol comprenant :
un dispositif de fourniture d'aérosol (110) comprenant une circuiterie de commande (112) permettant de commander un état d'activation du dispositif de fourniture d'aérosol ; et,
un détecteur biométrique (120) agencé pour détecter une propriété associée à un utilisateur (130) du dispositif de fourniture d'aérosol et fournir un signal à la circuiterie de commande,
dans lequel la circuiterie de commande (112) est agencée pour modifier un état d'activation du dispositif de fourniture d'aérosol (110) lors de la réception d'un signal en provenance du détecteur biométrique (120) associé à un utilisateur autorisé, et
dans lequel le détecteur biométrique (120) utilise une identification de point nodal ;
et **caractérisé en ce que** :
lors de la réception d'un signal en provenance du détecteur biométrique (120) associé à un utilisateur non autorisé, la circuiterie de commande est configurée pour régler l'état d'activation du dispositif de fourniture d'aérosol dans un état non fonctionnel qui est un état verrouillé, lequel requiert un niveau supplémentaire d'identification pour permettre que l'état verrouillé soit modifié en un état fonctionnel déverrouillé.

2. Agencement de fourniture d'aérosol selon la revendication 1, dans lequel le niveau supplémentaire d'identification comprend un mot de passe ou une clé d'accès.

3. Agencement de fourniture d'aérosol selon la revendication 1 ou la revendication 2, dans lequel un état d'activation par défaut du dispositif de fourniture d'aérosol (110) est un état non fonctionnel ;
et dans lequel la circuiterie de commande est configurée pour, après qu'un utilisateur a fini d'utiliser le dispositif, réinitialiser le dispositif sur l'état non fonctionnel par défaut.

4. Agencement de fourniture d'aérosol selon la revendication 3, dans lequel un utilisateur est réputé avoir fini d'utiliser le dispositif de fourniture d'aérosol (110) après avoir terminé une session de tabagisme.

5. Agencement de fourniture d'aérosol selon une quelconque revendication précédente, dans lequel le détecteur biométrique (120) comprend un scanner facial.

6. Agencement de fourniture d'aérosol selon une quelconque revendication précédente, dans lequel, lorsqu'un utilisateur autorisé est détecté, la circuiterie de commande (112) modifie l'état d'activation du dispositif de fourniture d'aérosol (110) en un état fonctionnel, dans lequel, dans l'état fonctionnel, un élément chauffant (116) est automatiquement activé.

7. Agencement de fourniture d'aérosol selon une quelconque revendication précédente, dans lequel la circuiterie de commande (112) est agencée pour modifier un état d'activation du dispositif de fourniture d'aérosol (110) d'un état d'activation par défaut à un premier état d'activation lors de la réception d'un premier signal en provenance du détecteur biométrique (120), et dans lequel la circuiterie de commande (112) est agencée pour modifier un état d'activation du dispositif de fourniture d'aérosol d'un état d'activation par défaut à un second état d'activation lors de la réception d'un second signal en provenance du détecteur biométrique (120), dans lequel le premier signal est associé à un premier utilisateur et le second signal est associé à un second utilisateur.

8. Agencement de fourniture d'aérosol selon la revendication 7, dans lequel le premier utilisateur est un premier utilisateur autorisé et le premier état d'activation est un premier état fonctionnel.

9. Agencement de fourniture d'aérosol selon la revendication 8, dans lequel le second utilisateur est un second utilisateur autorisé et le second état d'activation est un second état fonctionnel, dans lequel le second état fonctionnel est différent du premier état fonctionnel

10. Agencement de fourniture d'aérosol selon la revendication 9, dans lequel le premier état fonctionnel est associé à un premier profil de chauffage, et dans lequel le second état fonctionnel est associé à un second profil de chauffage.

11. Agencement de fourniture d'aérosol selon une quelconque revendication précédente, dans lequel le dispositif de fourniture d'aérosol (110) comprend le détecteur biométrique (120).

12. Agencement de fourniture d'aérosol selon l'une quelconque des revendications 1 à 10, dans lequel le détecteur biométrique (120) fait partie d'un dispositif externe, comprenant facultativement un smartphone ou une tablette.

13. Procédé de fourniture d'un aérosol à partir d'un agencement de fourniture d'aérosol, le procédé comprenant :
l'envoi, par un détecteur biométrique (120), d'un signal associé à un utilisateur autorisé, dans lequel le détecteur biométrique est agencé pour détecter une propriété associée à un utilisateur du dispositif de fourniture d'aérosol permettant de fournir le signal, dans lequel le détecteur biométrique utilise une identification de point nodal ;
la réception, par une circuiterie de commande (112) d'un dispositif de fourniture d'aérosol (110), du signal ;
la modification, par la circuiterie de commande (112), d'un état d'activation du dispositif de fourniture d'aérosol (110) d'un état d'activation par défaut à un état fonctionnel ; et
**caractérisé en ce que** :
lors de la réception d'un signal en provenance du détecteur biométrique associé à un utilisateur non autorisé, la circuiterie de commande (112) règle l'état d'activation du dispositif de fourniture d'aérosol (110) sur un état non fonctionnel qui est un état verrouillé, lequel requiert un niveau supplémentaire d'identification pour permettre que l'état verrouillé soit modifié en un état fonctionnel déverrouillé.

14. Procédé selon la revendication 13, dans lequel l'état d'activation par défaut est un état non fonctionnel.

15. Procédé selon la revendication 14, dans lequel la circuiterie de commande est configurée pour, après qu'un utilisateur a fini d'utiliser le dispositif de fourniture d'aérosol (112), réinitialiser le dispositif de fourniture d'aérosol sur l'état non fonctionnel.
